# EUROPEAN PATENT APPLICATION

(11) **EP 4 827 084 A1**
(43) Date of publication of application: **21.10.2026**
(21) Application number: 25870641.5
(22) Date of filing: 11.08.2025
(51) Int. Cl.: H04N 13/332

(54) **VIRTUAL REALITY DISPLAY SYSTEM, METHOD AND APPARATUS, AND DEVICE AND MEDIUM**

(30) Priority: 27.09.2024 CN 202411362971
(71) Applicant: Chery Automobile Co., Ltd., Wuhu, Anhui 241006 (CN); Wuhu Automobile Advanced Technology Institute, Wuhu, Anhui 241006 (CN)
(72) Inventor: HUANG, Yong, Wuhu, Anhui 241006 (CN)
(74) Representative: Adamson Jones
(86) International application number: PCT/CN2025/113772
(87) International publication number: WO 2026/066737

(57) **Abstract**

A virtual reality display system, method and apparatus, and a device and a medium. The system comprises a virtual reality device (110), a vehicle-mounted camera assembly (120) and a vehicle-mounted terminal (130), wherein the vehicle-mounted camera assembly (120) is configured to collect road condition images and send the road condition images to the vehicle-mounted terminal (130); the vehicle-mounted terminal (130) is configured to perform identification on the received road condition images to obtain an identification result, analyze the identification result to obtain loading delay compensation data, and send the loading delay compensation data and the identification result to the virtual reality device (110); and the virtual reality device (110) is configured to receive the loading delay compensation data and the identification result, acquire loading displacement data on the basis of the identification result, and display a virtual reality picture on the basis of the loading delay compensation data and the loading displacement data.

## Description

The present disclosure claims priority to Chinese Patent Application No. 202411362971.0, filed September 27, 2024, and entitled "VIRTUAL REALITY DISPLAY SYSTEM, METHOD, DEVICE, EQUIPMENT AND MEDIUM", the entire contents of which are incorporated herein by reference.

### TECHNICAL FIELD

The embodiments of the present disclosure relate to the technical field of virtual reality, and particularly to a virtual reality display system, method, apparatus, device, and medium.

### BACKGROUND

Virtual Reality (VR) technology creates and simulates a three-dimensional virtual world, enabling users to gain an immersive experience in the virtual world through interactive devices such as head-mounted displays, controllers, and body tracking devices.

VR technology can be applied to vehicle riding scenarios. In particular, in-vehicle VR products provide passengers with a brand-new means of entertainment and information access. By wearing VR devices, passengers can watch multimedia content, play games, or take virtual tours while the vehicle is in motion.

However, road conditions may change at any time during vehicle driving, and jolting is unavoidable, which affects the stability of image display on VR devices.

### SUMMARY

The embodiments of the present disclosure provide a virtual reality display system, method, apparatus, device, and medium. The technical solutions are as follows.

On the one hand, a virtual reality display system is provided, which includes a virtual reality device, an in-vehicle camera assembly, and an in-vehicle terminal;
the in-vehicle camera assembly is configured to collect a road condition image and send the road condition image to the in-vehicle terminal, wherein the road condition image indicates a road condition of a road on which a first vehicle is located;
the in-vehicle terminal is configured to recognize the road condition image to obtain a recognition result, obtain loading delay compensation data based on the recognition result, and send the loading delay compensation data and the recognition result to the virtual reality device; wherein the recognition result indicates a type of an obstacle contained in the road condition image, the loading delay compensation data indicates a moment when the virtual reality device displays at least one element in a virtual reality picture, and the at least one element forms a virtual scene presented by the virtual reality picture and provides a user with virtual reality perception; and
the virtual reality device is configured to obtain loading displacement data based on the recognition result and display the virtual reality picture based on the loading delay compensation data and the loading displacement data, wherein the loading displacement data indicates a display position of the at least one element in the virtual reality picture.

In an alternative embodiment, the in-vehicle terminal is further configured to: perform object detection on the road condition image through an object detection model to obtain an object detection result, wherein the object detection result indicates whether an obstacle exists in the road condition image; and obtain the recognition result based on the object detection result in a case where the object detection result indicates that the obstacle exists in the road condition image; wherein the recognition result includes a first position of the obstacle in the road condition image and an obstacle type corresponding to the obstacle.

In an alternative embodiment, the in-vehicle terminal is further configured to: determine a first distance between the obstacle and the first vehicle based on the first position and a position of the first vehicle; and determine the loading delay compensation data based on the first distance and a speed of the first vehicle.

In an alternative embodiment, the in-vehicle camera assembly is further configured to collect the road condition image in real time at a preset frequency and send the road condition image to the in-vehicle terminal at the preset frequency; and
the in-vehicle terminal is further configured to: update the first distance based on the road condition image received in real time to obtain an updated first distance, obtain first delay data based on the updated first distance and the speed of the first vehicle, obtain a first unit duration consumed by the in-vehicle camera for collecting the road condition image once and sending the first unit duration to the in-vehicle terminal; and determine the loading delay compensation data based on the first delay data and the first unit duration.

In an alternative embodiment, the virtual reality device is further configured to: determine a displacement type based on the obstacle type in the recognition result, wherein the displacement type indicates a direction for adjusting the display position of the at least one element in the virtual reality picture; obtain a loading displacement comparison table and pixel proportion data of the obstacle in the road condition image; and determine the loading displacement data from the loading displacement comparison table based on the pixel proportion data and the displacement type.

In an alternative embodiment, the in-vehicle camera assembly is further configured to preprocess the road condition image to obtain a preprocessed road condition image meeting preset image processing format requirements, and send the preprocessed road condition image to the in-vehicle terminal; and
the in-vehicle terminal is further configured to receive the preprocessed road condition image and recognize the preprocessed road condition image to obtain the recognition result.

On the other hand, a virtual reality display method is provided, which is executed by an in-vehicle terminal, and the method includes:
receiving a road condition image, wherein the road condition image is collected by an in-vehicle camera assembly of a first vehicle and indicates a road condition of a road on which the first vehicle is located;
recognizing the road condition image as received to obtain a recognition result, wherein the recognition result indicates a type of an obstacle contained in the road condition image;
obtaining loading delay compensation data by analyzing the recognition result; and
sending the loading delay compensation data and the recognition result to a virtual reality device;
wherein the loading delay compensation data indicates a moment when the virtual reality device displays at least one element in a virtual reality picture, and the at least one element forms a virtual scene presented by the virtual reality picture and provides a user with virtual reality perception; wherein after receiving the recognition result, the virtual reality device obtains loading displacement data based on the recognition result, and displays the virtual reality picture based on the loading delay compensation data and the loading displacement data, the loading displacement data indicating a display position of the at least one element in the virtual reality picture.

On the other hand, a virtual reality display apparatus is provided, and the virtual reality display apparatus includes:
a receiving module configured to receive a road condition image, wherein the road condition image is collected by an in-vehicle camera assembly of a first vehicle and indicates a road condition of a road on which the first vehicle is located;
a recognition module configured to recognize the road condition image as received to obtain a recognition result, wherein the recognition result indicates a type of an obstacle contained in the road condition image;
an analysis module configured to analyze the recognition result to obtain loading delay compensation data; and
a sending module configured to send the loading delay compensation data and the recognition result to a virtual reality device, wherein the loading delay compensation data indicates a moment when the virtual reality device displays at least one element in a virtual reality picture, and the at least one element forms a virtual scene presented by the virtual reality picture and provides a user with virtual reality perception; wherein after receiving the recognition result, the virtual reality device obtains loading displacement data based on the recognition result, and displays the virtual reality picture based on the loading delay compensation data and the loading displacement data, the loading displacement data indicating a display position of the at least one element in the virtual reality picture.

On the other hand, a computer device is provided, which includes a processor and a memory. The memory stores at least one instruction, at least one program, a code set, or an instruction set. The at least one instruction, the at least one program, the code set, or the instruction set is loaded and executed by the processor to implement the virtual reality display method as described in any one of the embodiments of the present disclosure.

On the other hand, a computer-readable storage medium is provided, in which at least one instruction, at least one program, a code set, or an instruction set is stored. The at least one instruction, the at least one program, the code set, or the instruction set is loaded and executed by a processor to implement the virtual reality display method as described in any one of the embodiments of the present disclosure.

On the other hand, a computer program product or computer program is provided. The computer program product or computer program includes computer instructions stored in a computer-readable storage medium. The processor of the computer device reads the computer instructions from the computer-readable storage medium and executes the computer instructions, so that the computer device performs the virtual reality display method described in any of the aforementioned embodiments.

The beneficial effects brought by the technical solutions provided in the embodiments of the present disclosure include at least:
When a virtual reality device is used in a vehicle riding scenario, the road condition image is collected in real time to obtain the road condition of the road on which the vehicle is traveling. Based on the presence of an obstacle in the road condition and the obstacle type of the obstacle, it is determined whether the vehicle will jolt during driving, so that delay compensation is performed on the virtual reality device based on the predicted jolt situation, alleviating the problem of display delay of the virtual reality picture caused by the user's head movement. By analyzing the road condition image, the loading displacement data and the loading delay compensation data are obtained and the manner for the virtual reality device to display elements in the virtual reality picture when the vehicle passes obstacles is determined, such that the elements in the picture are preloaded to the target positions, which reduces the dizziness and delay problems when the user wears the virtual reality device to watch the picture, thereby improving the stability of the virtual reality device when displaying the virtual reality picture, and reducing the sense of fragmentation of the virtual reality picture caused by jolting. In addition, by determining the display position and moment of the elements through the loading delay compensation and displacement data, the problem of elements going out of the picture or being offset in display position due to vehicle jolting caused by the obstacle is avoided, thereby improving the display accuracy of the virtual reality picture.

### BRIEF DESCRIPTION OF DRAWINGS

FIG. 1 is a schematic diagram of a virtual reality display system according to some embodiments of the present disclosure;
FIG. 2 is a flowchart of a virtual reality display method according to some embodiments of the present disclosure;
FIG. 3 is a schematic diagram of a dataset in a training phase according to some embodiments of the present disclosure;
FIG. 4 is a flowchart of another virtual reality display method according to some embodiments of the present disclosure;
FIG. 5 is a structural block diagram of a virtual reality display apparatus according to some embodiments of the present disclosure; and
FIG. 6 is a structural block diagram of a computer device according to some embodiments of the present disclosure.

### DETAILED DESCRIPTION

First, a brief introduction to the terms involved in the embodiments of the present disclosure is provided as follows.

Virtual Reality (VR): It is a technology that simulates and generates a three-dimensional virtual environment through computer technology and hardware devices, where users can immerse themselves and interact. VR technology aims to provide users with the perception of a virtual world, enabling them to experience a virtual space different from the real world in an immersive manner.

VR devices are key to implementing VR technology. Common VR devices include head-mounted VR devices and controller-based VR devices, such as VR glasses and VR headsets. Users wear VR devices, which display virtual reality images, and users gain the perception of virtual reality by viewing these images.

VR technology has a wide range of applications, including but not limited to: (1) Gaming: It provides an immersive gaming experience, allowing users to participate in games in a lifelike manner. (2) 3D Design: Taking automotive design as an example, VR technology allows designers to construct and modify vehicle models in a three-dimensional space for display and evaluation. (3) In-vehicle Applications: VR technology provides entertainment for passengers during travel, enabling them to experience various games and virtual world scenarios by wearing VR devices.

The virtual reality display system in the present disclosure is mainly applied to vehicle riding scenarios, where users wear VR devices while riding in a vehicle to obtain a virtual reality experience during the vehicle's journey.

Image Signal Processor (ISP): It is a dedicated digital signal processor responsible for converting raw image data captured by a camera into high-quality digital images. This process involves a series of image processing steps to enhance image quality and prepare the image for display or storage. An ISP is typically integrated into a camera module or used as a standalone chip in conjunction with a camera sensor. For example, in smartphones, digital cameras, surveillance cameras, and other image capture devices, the ISP affects the quality of the final image.

The in-vehicle camera assembly in the present disclosure integrates an ISP. After the in-vehicle camera assembly captures road condition images, the ISP preprocesses the images to improve their quality, ensuring that the processed images meet the data requirements for image recognition and analysis.

VR technology involves the construction and simulation of a three-dimensional virtual environment using computer graphics, sensor technology, and human-computer interaction interfaces. Through a range of highly specialized devices, including head-mounted displays (HMDs), handheld controllers, and body motion tracking systems, VR technology enables users to achieve a deep sense of immersion in the virtual environment. Users interact with the virtual world through these devices, realizing comprehensive sensory participation and experience.

In vehicle riding scenarios, the application of an in-vehicle virtual reality system provides passengers with an innovative way to access entertainment and information. While the vehicle is in motion, passengers can watch multimedia content, participate in gaming activities, or experience virtual tours by wearing VR devices (i.e., head-mounted displays). Meanwhile, since the virtual reality images are presented to passengers via the VR devices worn by them, the display of such images does not interfere with the driver. Notably, the user wearing the VR device may also be the driver. For example, the vehicle's head-up display (HUD) information can be displayed on the VR device and synchronized with the road condition images. The embodiments of the present disclosure do not limit the subject wearing the VR device.

However, the vehicle encounters various changes in road conditions during driving, including but not limited to uneven road surfaces (such as raised surfaces, sunken surfaces, road barriers, speed bumps, etc.) and road turns, which may cause vehicle jolting. This impairs the stability of image loading on VR devices and reduces the real-time image loading efficiency, resulting in a mismatch between the displayed images and the head movements of the user wearing the device, and a delay in the compensation data for image loading delays.

Image loading delays disrupt the user's immersive experience, reduce the fluency of virtual reality images, and cause dizziness in users. Therefore, ensuring that VR devices provide stable and smooth images and experiences during vehicle driving is an urgent problem to be solved.

The present disclosure provides a virtual reality display system, which includes an in-vehicle terminal, an in-vehicle camera assembly, and a virtual reality device. The system performs vertical delay compensation on the display image of the virtual reality device when the vehicle jolts up and down as it passes road obstacles. Since jolting caused by passing obstacles leads to head movement of the user, the virtual reality display system preloads each element in the virtual reality picture to a specified position, so that the picture elements displayed by the virtual reality device match the user's head movement, reduce the impact of jolting on picture stability, and lower the dizziness felt by the user when using the virtual reality device.

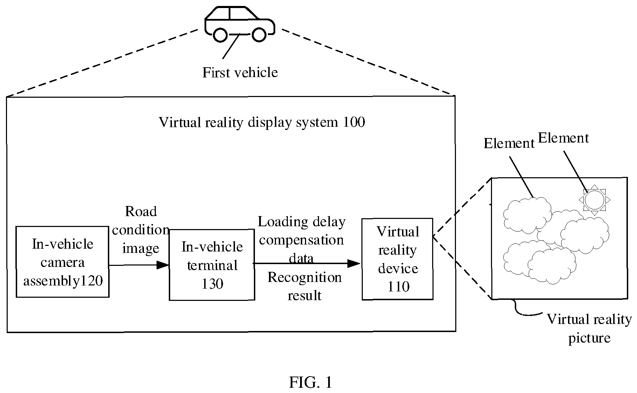

Schematically, referring to FIG. 1, which is a schematic diagram of a virtual reality display system according to some embodiments of the present disclosure. The virtual reality display system 100 includes a virtual reality device 110, an in-vehicle camera assembly 120, and an in-vehicle terminal 130.

The virtual reality display system 100 is configured to provide virtual reality services for a first vehicle, and the in-vehicle terminal 130 is an internal terminal of the first vehicle. The in-vehicle camera assembly 120 is arranged on the first vehicle, e.g., mounted outside or inside the first vehicle, and is configured to collect images of the environment where the first vehicle is located, such as road condition images of the road where the first vehicle is traveling. The virtual reality device 110 is configured to display virtual reality pictures for passengers in the first vehicle, and a communication connection exists among the virtual reality device 110, the in-vehicle camera assembly 120, and the in-vehicle terminal 130.

During the driving of the first vehicle, the in-vehicle camera assembly 120 is configured to collect road condition images indicating the road conditions of the road where the first vehicle is traveling, and send the collected road condition images to the in-vehicle terminal 130.

Exemplarily, the in-vehicle camera assembly 120 is mounted on the windshield of the first vehicle to collect road conditions directly in front of the first vehicle. During the driving of the first vehicle, the in-vehicle camera assembly 120 collects road condition images in real time at a preset frequency and sends the collected road condition images to the in-vehicle terminal 130. For example, a first image is collected at a first moment and sent to the in-vehicle terminal 130; a second image is collected at a second moment after the first moment and sent to the in-vehicle terminal 130, and so on.

The in-vehicle terminal 130 is configured to recognize the received road condition image to obtain a recognition result, which indicates the type of obstacle contained in the road condition image.

The recognition process is used to determine whether the road condition image contains an obstacle and, if so, determine the type of obstacle. A pre-trained object detection model is deployed in the in-vehicle terminal 130, which can analyze and recognize the road condition image, determine whether the image contains the obstacle, determine the type of the obstacle if any, and generate a recognition result. The recognition result includes the type of obstacle and the position information of the obstacle in the road condition image. The object detection model is a pre-trained machine learning model.

The in-vehicle terminal 130 is capable of analyzing the recognition result to obtain loading delay compensation data. The loading delay compensation data indicates the moment when the virtual reality device 110 displays at least one element in the virtual reality picture, and the at least one element forms the virtual scene presented by the virtual reality picture and provides the user with virtual reality perception.

The in-vehicle terminal is capable of calculating the distance between the obstacle and the first vehicle according to the recognition result, e.g., the linear distance between the obstacle and the first vehicle, determining the moment when the first vehicle passes the obstacle based on the distance and the driving speed of the first vehicle, and further obtaining the loading delay compensation data. The loading delay compensation data indicates the moment when the virtual reality device 110 preloads at least one element.

Since the virtual reality device 110 needs a certain period of time to perform steps such as calculation and picture rendering when loading the virtual reality picture, preloading at least one element can make the display moment of the at least one element in the virtual reality picture match the user's head state when the first vehicle passes the obstacle.

For example, when the first vehicle passes a sunken road surface, it will jolt up and down, causing head movement of the user wearing the virtual reality device 110 and a vertical change of the head position. When the virtual reality device 110 loads and presents the virtual reality picture to the user, it mainly loads corresponding elements by monitoring the user's head movement, so as to display pictures and elements matching the head rotation when the user turns his head. Therefore, the loading delay compensation data refers to the moment when the virtual reality device 110 loads corresponding elements in the virtual reality picture.

The in-vehicle terminal 130 sends the loading delay compensation data and the recognition result to the virtual reality device 110.

The virtual reality device 110 is configured to receive the loading delay compensation data and the recognition result, obtain loading displacement data based on the recognition result, and display the virtual reality picture based on the loading delay compensation data and the loading displacement data. The loading displacement data indicates the display position of at least one element in the virtual reality picture.

The displacement data indicates the manner in which the virtual reality device 110 adjusts the display position of the at least one element in the picture, so that when the first vehicle passes the obstacle, even if the user's head moves and its vertical position changes due to the jolting, the virtual reality device 110 can display the at least one element at an appropriate position matching the user's head movement, reduce the impact of the jolting on the displayed picture, and keep the picture viewed by the user stable.

Since different types of obstacles have different vertical impacts on the first vehicle, it is necessary to determine the actual loading displacement data according to the recognition result.

The in-vehicle terminal 130 displays the virtual reality picture based on the loading delay compensation data and the loading displacement data, wherein the display position of at least one element in the virtual reality picture is determined according to the loading displacement data.

For example, the first vehicle passes an obstacle and jolts at a third moment. The loading delay compensation data instructs the virtual reality device 110 to start loading at least one element at a fourth moment before the third moment, and the loading displacement data instructs the virtual reality device 110 to move the at least one element to a first position in the virtual reality picture. Then, when the first vehicle passes the obstacle, at least one element is loaded at the first position in the virtual reality picture and presented to the user wearing the virtual reality device 110.

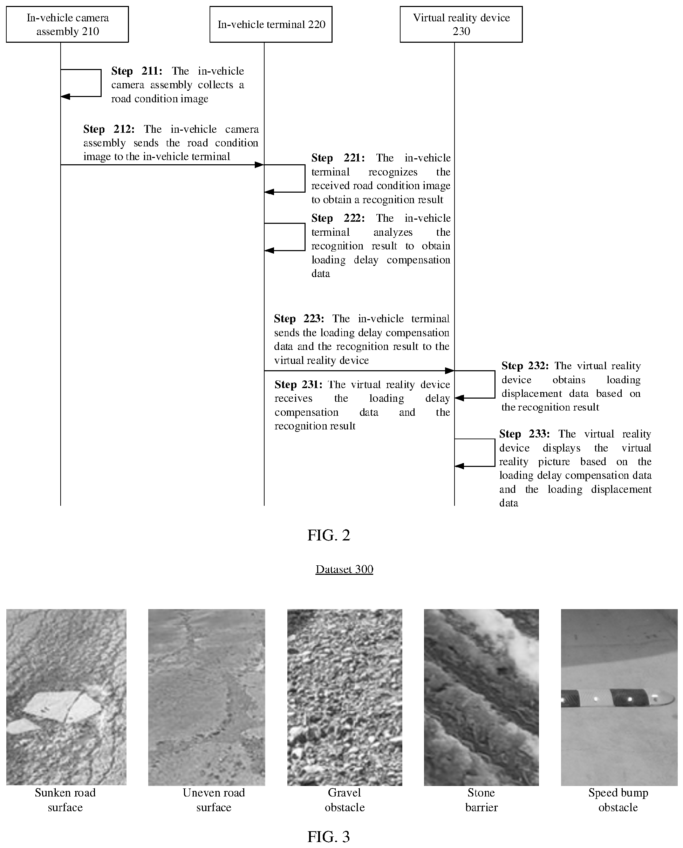

Combined with the above term introduction and application scenarios, the virtual reality display method provided by the present disclosure is described by taking the virtual reality display system as an example. The virtual reality display system includes an in-vehicle camera assembly 210, an in-vehicle terminal 220, and a virtual reality device 230, and a communication connection is established among the in-vehicle camera assembly 210, the in-vehicle terminal 220, and the virtual reality device 230. As shown in FIG. 2, which is a flowchart of a virtual reality display method according to some embodiments of the present disclosure, the method includes the following steps.

In step 211, the in-vehicle camera assembly collects a road condition image.

The road condition image indicates the road condition of the road where the first vehicle is traveling.

Optionally, the number of the in-vehicle camera assembly is at least one, and it is mounted on the first vehicle, e.g., outside or inside the first vehicle.

For example, a first in-vehicle camera assembly is mounted on the windshield of the first vehicle to collect the road condition image of the road in front of the first vehicle. When the first vehicle moves forward, the road condition image is used to determine whether the front of the first vehicle is safe and assist the driver in controlling the first vehicle.

For example, a second in-vehicle camera assembly is mounted on the trunk or rear windshield of the first vehicle to collect the road condition image of the road behind the first vehicle. When the first vehicle needs to reverse, the road condition image is used to determine whether the rear of the first vehicle is safe.

For example, in-vehicle camera assemblies are mounted on the left and right doors of the first vehicle to collect the road condition image of the roads on the left and right sides of the first vehicle. When the first vehicle needs to turn, the road condition image is used to determine whether the two sides of the first vehicle are safe.

The resolution of the in-vehicle camera assembly meets the preset resolution requirement, which can improve the quality of road condition images and make the images clearer.

It is worth noting that the above in-vehicle camera assembly is also implemented as other sensor assemblies, such as a lidar assembly, which recognizes the road condition of the first vehicle through lidar signals.

In some embodiments, the in-vehicle camera assembly collects the road condition image in real time at a preset frequency and sends the road condition image to the in-vehicle terminal at the preset frequency.

That is, the in-vehicle camera assembly collects the road condition image every preset time period during the driving of the first vehicle, and sends the image to the in-vehicle terminal immediately after collection.

Exemplarily, the preset frequency is once every 3 seconds, i.e., the road condition image is collected every 3 seconds.

For example, at the first moment of 10:00:00, a road condition image is collected and sent to the in-vehicle terminal; at the second moment of 10:00:03, a road condition image is collected and sent to the in-vehicle terminal; at the third moment of 10:00:06, a road condition image is collected and sent to the in-vehicle terminal, and so on.

In some embodiments, the preset frequency is related to the speed of the first vehicle. Optionally, the preset frequency is positively correlated with the speed of the first vehicle, i.e., the higher the speed of the first vehicle, the higher the frequency of collecting road condition images. For example, when the speed of the first vehicle is lower than 80 km/h, the collection frequency of road condition images is once every 3 seconds; when the speed of the first vehicle is higher than 80 km/h, the collection frequency is once every 1.5 seconds.

Collecting road condition images in real time can more accurately identify and locate possible obstacles on the road, thereby reducing the probability of missed detection and false detection. When the obstacle exists, the distance between the obstacle and the first vehicle is reflected over time, so as to determine the possible impact of the obstacle on the picture display of the virtual reality device and enhance the environmental perception of the first vehicle during driving.

In step 212, the in-vehicle camera assembly sends the road condition image to the in-vehicle terminal.

Optionally, to improve image quality, after collecting the road condition image, the in-vehicle camera assembly preprocesses the road condition image to obtain a preprocessed road condition image that meets the preset image processing format requirement, and sends the preprocessed road condition image to the in-vehicle terminal.

Exemplarily, the ISP is integrated in the in-vehicle camera assembly. After the in-vehicle camera assembly collects the road condition image, the ISP preprocesses the road condition image to improve its quality.

The preprocessing of the road condition image by the ISP includes but is not limited to the following items.
1. Lens Shading Correction: Since the optical characteristics of the lens may cause uneven brightness at the edge of the road condition image, this item compensates the edge brightness of the road condition image to make the overall brightness more uniform.
2. Bad Pixel Correction: Detect and repair bad pixels in the image, such as dead pixels, bright pixels, or drift pixels, to ensure image quality.
3. Color Interpolation: Estimate missing color information through algorithms to reconstruct full-color images.
4. Noise Reduction: Remove random noise and fixed-pattern noise in the image, such as noise caused by sensor readout or circuit problems, to improve the signal-to-noise ratio of the image.
5. White Balance: Correct the color temperature of the image so that white object presents correct colors under different lighting conditions.
6. Sharpening: Enhance the edges and details of the image to improve image clarity.
7. Auto Focus: Ensure that objects shot by the in-vehicle camera assembly at different distances remain clear.

By performing preprocessing steps through the ISP, the in-vehicle camera assembly can provide clearer, more accurate, and more reliable road condition images, avoiding the problem of low accuracy of the recognition result caused by recognizing blurred road condition images in subsequent steps.

In step 221, the in-vehicle terminal recognizes the received road condition image to obtain a recognition result.

The recognition result indicates the type of obstacle contained in the road condition images.

Optionally, when the in-vehicle camera assembly sends the preprocessed road condition image, the in-vehicle terminal receives the preprocessed road condition image and recognizes the image to obtain the recognition result.

The recognition process of the in-vehicle terminal is configured to determine whether the road condition image contains an obstacle and analyze the type of obstacle if the road condition image contains an obstacle.

Optionally, a pre-trained object detection model is deployed in the in-vehicle terminal, and the in-vehicle terminal performs object detection on the road condition image through the object detection model to obtain an object detection result, which indicates whether there is an obstacle in the road condition image.

Exemplarily, the object detection model is a pre-trained deep neural network model, and the architecture of the deep neural network model may be one of the following model architectures.
(1) You Only Look Once (YOLO) series model architecture: YOLO is a popular one-stage object detection algorithm that converts the object detection task into a regression problem and predicts the position and category of objects in the image through a single forward propagation. The YOLO algorithm can process images and detect objects in real time, directly predicting bounding boxes and category probabilities from images without complex region proposal or subsequent processing. It can detect multiple objects in the image, including overlapping ones. The YOLO series includes multiple versions from YOLO_v1 to YOLO_v5.
(2) Single Shot MultiBox Detector (SSD) series model architecture: SSD is also a one-stage object detection algorithm that performs object detection on feature maps of different scales to detect objects of different sizes. By detecting on feature maps of different levels, it can effectively detect objects of different sizes. Multiple default boxes are predicted at each position, increasing the diversity of detection.
(3) Fast Region-based Convolutional Network (Faster R-CNN) series model architecture: Faster R-CNN is a two-stage object detection algorithm that first generates candidate regions through a region proposal network, and then classifies these regions and performs bounding box regression. It can generate high-quality candidate regions to lay a foundation for subsequent detection. The extracted feature maps are used for both region proposal and subsequent classification and regression, improving efficiency and enabling detection of objects in any direction.
(4) Residual Network (ResNet) series model architecture: ResNet is a deep convolutional neural network mainly used for image classification tasks. It solves the problem of difficult training of deep networks by introducing residual learning. It alleviates the gradient vanishing problem by learning residual functions, making the network deeper. It introduces shortcut connections of identity mapping, allowing gradients to propagate directly through layers.

Exemplarily, the present disclosure takes YOLO_v5 as the model architecture for pre-training to obtain the object detection model as an example.

In the training phase, the object detection model is trained using the dataset 300 shown in FIG. 3, so that the object detection model accurately recognizes obstacles such as uneven road surfaces and road barriers.

The dataset 300 contains various types of pictures, each containing one type of obstacle, such as sunken road surfaces, uneven road surfaces, gravel obstacles, speed bump barriers, stone barriers, etc.

When the object detection result indicates that there is an obstacle in the road condition image, the in-vehicle terminal obtains the recognition result based on the object detection result.

Exemplarily, the object detection result output by the object detection model is taken as the recognition result.

The recognition result includes the first position of the obstacle in the road condition image and the type corresponding to the obstacle.

Exemplarily, refer to Table 1, Table 1 marks different types of obstacles.

**Table 1**

| Category | Gravel | Pit | Speed Bump | Step |
|---|---|---|---|---|
| No. | 1 | 2 | 3 | 4 |

In step 222, the in-vehicle terminal analyzes the recognition result to obtain loading delay compensation data.

The loading delay compensation data indicates the moment when the virtual reality device displays at least one element in the virtual reality picture, and the at least one element forms the virtual scene presented by the virtual reality picture and provides the user with virtual reality perception.

The loading delay compensation data includes a first duration required for preloading at least one element to a specified position in the virtual reality picture. A loading moment for loading at least one element is determined based on an arrival moment when the first vehicle reaches the obstacle and the first duration, and the at least one element starts to be loaded to the specified position in the virtual reality picture at the loading moment. The loading moment is prior to the arrival moment, and the duration between the loading moment and the arrival moment is the first duration.

When the first vehicle passes the obstacle, it displaces vertically, causing a corresponding displacement of the user's head in the vehicle. The head movement of the user wearing the virtual reality device will trigger a corresponding change in the virtual reality picture (i.e., the position of at least one element in the virtual reality picture changes). Since the virtual reality device requires a certain period of time to load the virtual reality picture and the at least one element, related technologies usually predict the movement trajectory (head rotation) of the user's head and preload the at least one element to a corresponding position in the virtual reality picture, so as to eliminate the time delay during element loading and enable the user to view a matching picture immediately after head movement.

The loading delay compensation data in the embodiments is determined after predicting the picture matching the user's head movement when the first vehicle passes the obstacle. The loading delay compensation data instructs the virtual reality device to preload at least one element to a specified position in the virtual reality picture, so that the picture viewed by the user matches the head movement when the vehicle jolts while passing the obstacle.

When providing the user with virtual world perception and displaying virtual reality pictures, the virtual reality device implements this by constructing a virtual scene (i.e., VR scene) and adding three-dimensional models of different elements in the virtual scene.

All elements in the virtual scene are constructed using a six-degree-of-freedom model. The six-degree-of-freedom model is a model for describing the motion of an object in three-dimensional space, which includes three translational motions and three rotational motions of the object in space. That is, the six-degree-of-freedom model is used to construct three-dimensional models of all elements in the virtual scene, so that the elements have an appearance similar or identical to that of a three-dimensional entity and move freely in the virtual scene.

When the first vehicle passes an obstacle, it displaces vertically (the direction perpendicular to the ground/Z-axis direction), e.g., moving upward or downward, and the user in the first vehicle will accordingly make head movement. To eliminate the impact of the user's head movement on the display of virtual reality pictures by the virtual reality device, delay compensation needs to be performed for the Z-axis direction and γ (rotation around the Y-axis, referred to as yaw, describing the angle of the user's head moving left and right), so that the picture viewed by the user matches the user's head movement when the first vehicle displaces vertically while passing the obstacle.

Optionally, the in-vehicle terminal determines a first distance between the obstacle and the first vehicle based on the first position (the position of the obstacle in the road condition image) and the position of the first vehicle, and determines the loading delay compensation data based on the first distance and the speed of the first vehicle.

When the in-vehicle camera assembly collects the road condition image, the distance between the in-vehicle camera assembly and the obstacle can be reflected based on the pixel proportion of the obstacle in the road condition image and the principle of perspective change, so as to determine the first distance between the first vehicle and the obstacle. In some embodiments, the distance between the in-vehicle camera assembly and the obstacle is determined as the first distance between the first vehicle and the obstacle.

The change in the speed of the first vehicle is obtained in real time to predict the time required for the first vehicle to travel the first distance. For example, when the first vehicle travels at a constant first speed, the time is directly determined by dividing the first distance by the first speed. For example, when the speed of the first vehicle changes in real time, the time is determined according to the average speed of the first vehicle within a fixed distance

In some embodiments, the road condition image is collected in real time and transmitted to the in-vehicle terminal by the in-vehicle camera assembly, and the in-vehicle terminal updates the first distance based on the road condition image received in real time to obtain an updated first distance.

That is, each time a road condition image is received, the newly received road condition image needs to be analyzed to update the distance between the first vehicle and the obstacle.

The in-vehicle terminal obtains the first delay data based on the updated first distance and the speed of the first vehicle, where the first delay data is the time required for the first vehicle to travel to the obstacle.

A first unit duration consumed by the in-vehicle camera for collecting a road condition image and sending it to the in-vehicle terminal in a single time is obtained, and the loading delay compensation data is determined based on the first delay data and the first unit duration.

In some embodiments, the virtual reality device also requires a certain calculation time to load elements into the virtual reality picture. A second duration for the virtual reality device to move elements in the virtual reality picture is obtained, and the loading delay compensation data is determined based on the first delay data, the first unit duration, and the second duration.

Exemplarily, when the first distance between the first vehicle and the obstacle is less than a preset distance threshold (e.g., 50 meters), the first delay data required for the first vehicle to reach the obstacle starts to be determined. A delay compensation number (in milliseconds) is determined according to the first delay data, the first unit duration, and the second duration.

Referring to Table 2, Table 2 is a delay compensation number comparison table.

**Table 2**

| First distance | 0~10 meters | 10~40 meters | 40~50 meters | Over 50 meters |
|---|---|---|---|---|
| Compensation number (ms) | 1 | 2 | 3 | 4 |

When the road condition image indicates the presence of multiple obstacles, the delay compensation number corresponding to each obstacle is determined based on Table 2 above, and the loading delay compensation data is determined based on the delay compensation number, the first delay data, the first unit duration, and the second duration.

Exemplarily, the road condition image indicates that there are two obstacles in the driving direction of the first vehicle, namely obstacle A and obstacle B. The road condition image is collected in real time, and the distances between the first vehicle and obstacle A and obstacle B are calculated respectively, where obstacle A is closer to the first vehicle.

When the first distance between the first vehicle and obstacle A is 50 meters, and the distance between the first vehicle and obstacle B exceeds 50 meters, the delay compensation number corresponding to obstacle A is determined to be 3, and the delay compensation number corresponding to obstacle B is determined to be 4 based on the delay compensation number comparison table.

The first delay data for the first vehicle to reach the obstacles includes delay data A and delay data B, where delay data A refers to the duration required for the first vehicle to reach obstacle A, and delay data B refers to the duration required for the first vehicle to reach obstacle B.

The sum of the delay data A, the first unit duration, and the second duration is 4 seconds. If the current moment is the first moment, the loading delay compensation data sent to the virtual reality device at the current moment instructs to start loading at least one element to the first specified position at the moment 4 seconds and 3 milliseconds after the current moment.

The sum of the delay data B, the first unit duration, and the second duration is 6 seconds. If the current moment is the first moment, the loading delay compensation data sent to the virtual reality device at the current moment also instructs to start loading at least one element to the second specified position at the moment 6 seconds and 4 milliseconds after the current moment.

The first specified position is determined based on the type of obstacle A, and the second specified position is determined based on the type of obstacle B.

During this process, since the road condition image is collected in real time, the distances between obstacle A, obstacle B, and the first vehicle are shortened respectively, and the corresponding delay data A and delay data B during the driving of the first vehicle also change. Therefore, the loading delay compensation data is updated accordingly, and the updated loading delay compensation data is sent to the virtual reality device each time until the first vehicle reaches the obstacle and the transmission stops.

That is, when the first vehicle reaches obstacle A, the virtual reality device has already loaded at least one element to the first specified position based on the latest loading delay compensation data received at the current moment, while the first vehicle has not yet reached obstacle B. At this time, the loading delay compensation data includes data corresponding to obstacle B. During the driving of the first vehicle from obstacle A to obstacle B, the road condition image is still collected in real time to update the delay compensation number and the delay data B. The updated loading delay compensation data is obtained and is sent to the virtual reality device until the first vehicle drives to obstacle B. At this time, the virtual reality device has already loaded at least one element to the second specified position based on the latest loading delay compensation data received at the current moment.

It is worth noting that the delay compensation number comparison table shown in Table 2 is a preset comparison table, and the data in the table are determined based on a large number of tests. In some embodiments, the delay compensation number may also be determined in other ways. For example, the relationship between the delay compensation number and the distance from the first vehicle to the obstacle is represented by a preset function mapping expression, and the delay compensation number is calculated based on the preset function mapping expression after collecting the distance from the first vehicle to the obstacle, which is not limited in the embodiments.

It is worth noting that the loading delay compensation data may be determined only based on the sum of the delay compensation number, the first unit duration, and the second duration, or may be determined by performing a weighting operation on the delay compensation number, the first unit duration, and the second duration in other ways.

In step 223, the in-vehicle terminal sends the loading delay compensation data and the recognition result to the virtual reality device.

When sending the recognition result, the in-vehicle terminal also sends the road condition image corresponding to the recognition result to the virtual reality device.

In step 231, the virtual reality device receives the loading delay compensation data and the recognition result.

The virtual reality device also receives the road condition image corresponding to the recognition result at the same time.

In step 232, the virtual reality device obtains loading displacement data based on the recognition result.

The loading displacement data indicates the display position of at least one element in the virtual reality picture, that is, the loading displacement data indicates the distance for moving at least one element up or down in the virtual reality picture.

The loading displacement data includes the distance and direction required to move at least one element to the specified position (display position) in the virtual reality picture, and is determined based on the type of obstacle that the first vehicle is about to pass.

When the first vehicle passes an obstacle, it displaces vertically, causing a corresponding displacement of the user's head in the vehicle. The head movement of the user wearing the virtual reality device will trigger a corresponding change in the virtual reality picture (i.e., the position of at least one element in the virtual reality picture changes). Since the virtual reality device requires a certain period of time to load the virtual reality picture and the at least one element, related technologies usually predict the movement trajectory (head rotation) of the user's head and preload the at least one element to a corresponding position in the virtual reality picture, so as to eliminate the time delay during element loading and enable the user to view a matching picture immediately after head movement.

The loading displacement data in the embodiments is determined after predicting the picture matching the user's head movement when the first vehicle passes the obstacle. The loading delay compensation data instructs the virtual reality device to preload at least one element to a specified position in the virtual reality picture, so that the picture viewed by the user matches the head movement when the vehicle jolts while passing the obstacle.

Optionally, the virtual reality device determines a displacement type based on the obstacle type in the recognition result, where the displacement type indicates the direction for adjusting the display position of at least one element in the virtual reality picture.

A loading displacement comparison table and the pixel proportion data of the obstacle in the road condition image are obtained, and the loading displacement data is determined from the loading displacement comparison table based on the pixel proportion data and the displacement type.

Schematically, referring to Table 3, Table 3 is a loading displacement comparison table.

**Table 3**

| Category | Gravel: 1 | | | Pit: 2 | | | Speed Bump: 3 | | Step: 4 |
|---|---|---|---|---|---|---|---|---|---|
| Pixel proportion | <5% | 5%~10% | >10% | <10% | 10%~15% | >15% | yellow-black | multiple points | |
| Offset | 2 | 4 | 6 | -2 | -4 | -6 | 2 | 1 | 6 |

The pixel proportion in the loading displacement comparison table refers to the pixel proportion data of the obstacle in the road condition image collected at the moment when the distance between the first vehicle and the obstacle is a specified distance, that is, the ratio of the pixels of the obstacle to the total pixels of the road condition image.

Since speed bumps and steps on roads have fixed specifications, it is unnecessary to analyze the pixel proportion data when the obstacle is a speed bump or a step.

Speed bumps on urban roads appear as yellow-black stripes, while speed bumps on highways appear as multi-dot obstacles.

The obstacle types include the following: gravel (No. 1), pit (No. 2), speed bump (No. 3), and step (No. 4). Among them, gravel, speed bumps, and steps are obstacles protruding from the road surface, and pits are obstacles sunken below the road surface. Therefore, a positive offset is set for gravel, speed bumps, and steps, and a negative offset is set for pits.

In some embodiments, when recognizing the obstacle type, the convex-concave state and convex-concave degree of the obstacle are recognized, and the offset value is determined in real time based on the convex-concave state and convex-concave degree. Exemplarily, a convex obstacle of 0-5% corresponds to an offset value of 2, a concave obstacle of -5% to 0 corresponds to an offset value of -2; a convex obstacle of 5%-10% corresponds to an offset value of 4, and a concave obstacle of -10% to -5% corresponds to an offset value of -4.

When the obstacle type is any one of gravel, speed bump, or step, the displacement type is determined to be positive, that is, the loading displacement data is a positive number, and the position of at least one element in the virtual reality picture is moved upward to the display position. When the obstacle type is pit, the displacement type is determined to be negative, that is, the loading displacement data is a negative number, and the position of at least one element in the virtual reality picture is moved downward to the display position.

The offset value refers to the unit distance of movement in the loading displacement data. For example, when the offset value is 2, it means moving at least one element upward by 2 unit distances. The unit distance refers to the unit distance in the virtual reality picture, for example, 10 centimeters in the virtual reality picture is 1 unit distance.

The loading displacement comparison table shown in Table 3 is a preset comparison table, and the data in the table are determined based on a large number of tests. In some embodiments, the offset values under different conditions may also be determined in other ways.

When the obstacle is gravel, if the pixel proportion data of the gravel is less than 5%, the loading displacement data is moving upward by 2 unit distances; if the pixel proportion data of the gravel is 5%~10%, the loading displacement data is moving upward by 4 unit distances; if the pixel proportion data of the gravel is more than 10%, the loading displacement data is moving upward by 6 unit distances.

When the obstacle is a pit, if the pixel proportion data of the pit is less than 10%, the loading displacement data is moving downward by 2 unit distances; if the pixel proportion data of the pit is 10%~15%, the loading displacement data is moving downward by 4 unit distances; if the pixel proportion data of the pit is more than 15%, the loading displacement data is moving downward by 6 unit distances.

When the obstacle is a yellow-black speed bump, the loading displacement data is moving upward by 2 unit distances. When the obstacle is a multi-dot speed bump, the loading displacement data is moving upward by 1 unit distance. When the obstacle is a step, the loading displacement data is moving upward by 6 unit distances.

In step 233, the virtual reality picture is displayed based on the loading delay compensation data and the loading displacement data.

The position of at least one element in the virtual reality picture is determined according to the loading displacement data.

For example, the first vehicle will pass an obstacle and jolt at 10:00:10, and the loading delay compensation data is 2 seconds, instructing the virtual reality device to start loading at least one element 2 seconds before reaching the obstacle, that is, to start loading at least one element at 10:00:08.

Preloading at least one element to a specified position in the virtual reality picture can keep the virtual reality picture viewed by the user stable when the first vehicle displaces vertically while passing the obstacle.

The loading displacement data is used to instruct the virtual reality device to move the position of at least one element in the virtual reality picture to the first position. Then, when the first vehicle passes the obstacle, at least one element is loaded at the first position in the virtual reality picture and displayed to the user wearing the virtual reality device.

Exemplarily, when the obstacle type is an object with a certain height, such as a step, stone, or speed bump, the first vehicle displaces upward vertically while passing the obstacle. At this time, the head of the user in the vehicle also displaces upward vertically due to inertia. To match the virtual reality picture viewed by the user with the user's head movement, at least one element starts to be loaded to a specified position in the virtual reality picture at the moment indicated by the loading delay compensation data, where the at least one element moves upward in the virtual reality picture to the specified position by the distance indicated by the loading displacement data.

When the first vehicle passes the obstacle, at least one element is loaded, and the picture viewed by the user remains stable before and after the first vehicle passes the obstacle.

Exemplarily, when the obstacle type indicates that the first vehicle is about to drive through a road section lower than the road level, such as a sunken road surface, it means that the first vehicle displaces downward vertically while passing the obstacle. At this time, the head of the user in the vehicle also displaces downward vertically due to inertia. To match the virtual reality picture viewed by the user with the user's head movement, at least one element starts to be loaded to a specified position in the virtual reality picture at the moment indicated by the loading delay compensation data, where the at least one element moves downward in the virtual reality picture to the specified position by the distance indicated by the loading displacement data.

When the first vehicle passes the obstacle, at least one element is loaded, and the picture viewed by the user remains stable before and after the first vehicle passes the obstacle.

In summary, according to the virtual reality display method and system provided by the present disclosure, when the virtual reality device is applied in a vehicle riding scenario, the road condition of the road where the vehicle is located is obtained by collecting images in real time, whether the vehicle will jolt during driving is judged according to the presence of the obstacle in the road condition and the type of obstacle, so as to perform delay compensation on the virtual reality device to alleviate the problem of virtual reality picture display delay caused by the user's head movement. By analyzing the road condition image, the loading displacement data and the loading delay compensation data are obtained and the manner for the virtual reality device to display elements in the virtual reality picture when the vehicle passes obstacles is determined, such that the elements in the picture are preloaded to the target positions, which reduces the dizziness and delay problems when the user wears the virtual reality device to watch the picture, thereby improving the user experience.

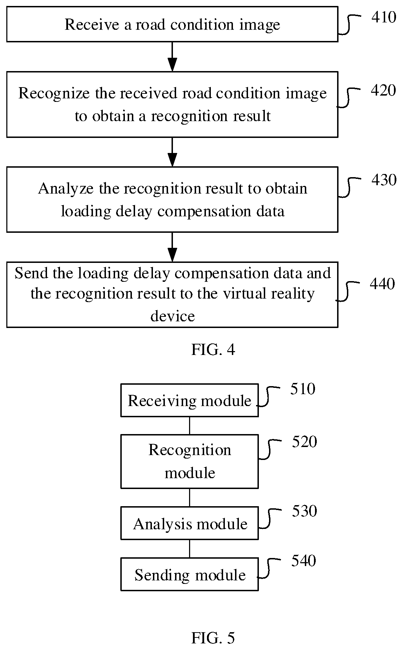

FIG. 4 is a flowchart of another virtual reality display method according to some embodiments of the present disclosure. The method is executed by an in-vehicle terminal of a first vehicle and includes the following steps.

In step 410, the road condition image is received.

The road condition image is an image collected by an in-vehicle camera assembly of the first vehicle, and indicates the road condition of the road where the first vehicle is located.

Optionally, the number of the in-vehicle camera assembly is at least one, and it is mounted outside the first vehicle. The in-vehicle camera assembly collects the road condition image in real time at a preset frequency, preprocesses the collected road condition image, and sends the preprocessed road condition image to the in-vehicle terminal at the preset frequency.

The in-vehicle terminal receives the preprocessed road condition image at a preset frequency, and obtains the road condition image with clarity and image quality that meet preset requirements.

In step 420, the received road condition image is recognized to obtain a recognition result.

The recognition result indicates the type of obstacle contained in the road condition image. The recognition process of the in-vehicle terminal is used to determine whether the road condition image contains the obstacle and, if so, analyze the type of the obstacle.

The recognition result includes the obstacle type and the position of the obstacle in the road condition image.

Optionally, a pre-trained object detection model is deployed in the in-vehicle terminal, and the in-vehicle terminal performs object detection on the road condition image through the object detection model to obtain an object detection result, which indicates whether there is an obstacle in the road condition image.

Exemplarily, the object detection result output by the object detection model includes the following contents: (1) whether there is an obstacle; (2) the type of the obstacle when there is an obstacle; (3) the position of the obstacle in the road condition image when there is an obstacle.

The object detection result output by the object detection model is taken as the recognition result.

In step 430, the recognition result is analyzed to obtain loading delay compensation data.

The loading delay compensation data indicates the moment when the virtual reality device displays at least one element in the virtual reality picture, and at least one element is used to form the virtual scene presented by the virtual reality picture, and provide the user with virtual reality perception.

Optionally, the in-vehicle terminal determines a first distance between the obstacle and the first vehicle based on the first position and the position of the first vehicle, and determines the loading delay compensation data based on the first distance and the speed of the first vehicle.

Exemplarily, the first distance is updated based on the road condition image received in real time to obtain an updated first distance. First delay data is obtained based on the updated first distance and the speed of the first vehicle. A first unit duration consumed by the in-vehicle camera for collecting a road condition image and sending it to the in-vehicle terminal in a single time is obtained. The loading delay compensation data is determined based on the first delay data and the first unit duration.

In step 440, the loading delay compensation data and the recognition result are sent to the virtual reality device.

After receiving the recognition result, the virtual reality device obtains loading displacement data based on the recognition result, and displays the virtual reality picture based on the loading delay compensation data and the loading displacement data. The loading displacement data indicates the display position of at least one element in the virtual reality picture.

In summary, according to the virtual reality display method provided by the present disclosure, whether there is an obstacle on the road and the type of the obstacle is analyzed according to the received road condition image, and whether the vehicle will jolt during driving is judged, so as to perform delay compensation on the virtual reality device to alleviate the problem of virtual reality picture display delay caused by the user's head movement. By analyzing the road condition image, the loading delay compensation data is obtained and the manner for the virtual reality device to display elements in the virtual reality picture when the vehicle passes obstacles is determined, such that the elements in the picture are preloaded to the target positions, which reduces the dizziness and delay problems when the user wears the virtual reality device to watch the picture, thereby improving the user experience.

FIG. 5 is a structural block diagram of a virtual reality display apparatus according to some embodiments of the present disclosure. As shown in FIG. 5, the apparatus includes the following components.

A receiving module 510 is configured to receive a road condition image. The road condition image is collected by an in-vehicle camera assembly of a first vehicle, and indicates the road condition of the road where the first vehicle is traveling.

A recognition module 520 is configured to recognize the road condition image as received to obtain a recognition result. The recognition result indicates the type of obstacle contained in the road condition image.

An analysis module 530 is configured to analyze the recognition result to obtain loading delay compensation data.

A sending module 540 is configured to send the loading delay compensation data and the recognition result to a virtual reality device; where the loading delay compensation data indicates the moment when the virtual reality device displays at least one element in the virtual reality picture, and the at least one element forms the virtual scene presented by the virtual reality picture and provides the user with virtual reality perception. After receiving the recognition result, the virtual reality device obtains loading displacement data based on the recognition result, and displays the virtual reality picture based on the loading delay compensation data and the loading displacement data, where the loading displacement data indicates the display position of at least one element in the virtual reality picture.

In an optional embodiment, the recognition module 520 is further configured to: perform object detection on the road condition image through an object detection model to obtain an object detection result, where the object detection result indicates whether there is an obstacle in the road condition image; and obtain the recognition result based on the object detection result when the object detection result indicates that there is an obstacle in the road condition image. The recognition result includes a first position of the obstacle in the road condition image and an obstacle type corresponding to the obstacle.

In an optional embodiment, the analysis module 530 is further configured to determine a first distance between the obstacle and the first vehicle based on the first position and the position of the first vehicle; and determine the loading delay compensation data based on the first distance and the speed of the first vehicle.

In an optional embodiment, the analysis module 530 is further configured to update the first distance based on the road condition image received in real time to obtain an updated first distance; obtain first delay data based on the updated first distance and the speed of the first vehicle; obtain a first unit duration consumed by the in-vehicle camera for collecting a road condition image and sending it to the in-vehicle terminal in a single time; and determine the loading delay compensation data based on the first delay data and the first unit duration.

In summary, according to the virtual reality display apparatus provided by the present disclosure, whether the vehicle will jolt during driving is judged according to the presence of the obstacle in the road condition and the type of obstacle, so as to perform delay compensation on the virtual reality device to alleviate the problem of virtual reality picture display delay caused by the user's head movement. By analyzing the road condition image, the loading displacement data and the loading delay compensation data are obtained and the manner for the virtual reality device to display elements in the virtual reality picture when the vehicle passes obstacles is determined, such that the elements in the picture are preloaded to the target positions, which reduces the dizziness and delay problems when the user wears the virtual reality device to watch the picture, thereby improving the user experience.

It should be noted that the virtual reality display apparatus provided in the above embodiment is only illustrated by the division of the above functional modules. In practical applications, the above functions may be allocated and completed by different functional modules as required, that is, the internal structure of the device is divided into different functional modules to complete all or part of the above described functions. In addition, the virtual reality display apparatus provided in the above embodiments and the virtual reality display method embodiments belong to the same concept, and the specific implementation process is detailed in the method embodiments, which will not be repeated here.

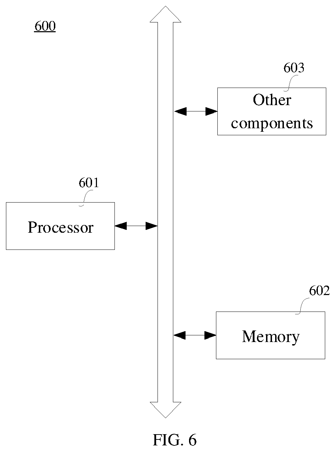

FIG. 6 is a structural block diagram of a computer device 600 according to some embodiments of the present disclosure. The computer device 600 is a smart phone, a tablet computer, a moving picture experts group audio layer III (MP3) player, a moving picture experts group audio layer IV (MP4) player, a laptop computer, or a desktop computer. The computer device 600 may also be called other names such as user equipment, portable terminal, laptop terminal, desktop terminal, and so on.

Generally, the computer device 600 includes a processor 601 and a memory 602.

The processor 601 includes one or more processing cores, such as a 4-core processor, an 8-core processor, etc. The processor 601 is implemented in at least one hardware form of digital signal processing (DSP), field-programmable gate array (FPGA), programmable logic array (PLA). The processor 601 also includes a main processor and a co-processor. The main processor is a processor for processing data in a wake-up state, also called central processing unit (CPU); the co-processor is a low-power processor for processing data in a standby state. In some embodiments, the processor 601 may be integrated with a graphics processing unit (GPU), which is responsible for rendering and drawing the content required to be displayed on the display screen. In some embodiments, the processor 601 may further include an artificial intelligence (AI) processor, which is used for processing computing operations related to machine learning.

The memory 602 may include one or more computer-readable storage media, which is non-transitory. The memory 602 also includes high-speed random access memory, and non-volatile memory, such as one or more magnetic disk storage devices, flash memory storage devices. In some embodiments, the non-transitory computer-readable storage medium in the memory 602 is used to store at least one instruction, and the at least one instruction is used to be executed by the processor 601 to implement the virtual reality display method provided in the method embodiments of the present disclosure.

In some embodiments, the computer device 600 further includes other components 603, and the type and quantity of other components 603 may be selected based on the functional requirements of the computer device 600. Those skilled in the art can understand that the structure shown in FIG. 6 does not constitute a limitation on the computer device 600, and may include more or fewer components than shown, or combine some components, or adopt a different component arrangement.

Optionally, the computer-readable storage medium may include read-only memory (ROM), random access memory (RAM), solid state drives (SSD), or optical disks, etc. The random access memory may include resistance random access memory (ReRAM) and dynamic random access memory (DRAM). The serial numbers of the embodiments of the present disclosure are only for description, and do not represent the advantages or disadvantages of the embodiments.

Some embodiments of the present disclosure further provide a computer device, which includes a processor and a memory. The memory stores at least one instruction, at least one program, a code set, or an instruction set. The at least one instruction, the at least one program, the code set, or the instruction set is loaded and executed by the processor to implement the virtual reality display method as described in any one of the embodiments of the present disclosure.

Some embodiments of the present disclosure further provide a computer-readable storage medium, where at least one instruction, at least one program, a code set, or an instruction set is stored in the storage medium, and the at least one instruction, the at least one program, the code set or the instruction set is loaded and executed by a processor to implement the virtual reality display method as described in any one of the above embodiments of the present disclosure.

Some embodiments of the present disclosure further provide a computer program product or computer program. The computer program product or computer program includes computer instructions stored in a computer-readable storage medium. A processor of a computer device reads the computer instructions from the computer-readable storage medium, and the processor executes the computer instructions, so that the computer device performs the virtual reality display method according to any one of the above embodiments.

## Claims

1. A virtual reality display system, comprising a virtual reality device, an in-vehicle camera assembly, and an in-vehicle terminal; wherein
the in-vehicle camera assembly is configured to collect a road condition image and send the road condition image to the in-vehicle terminal, wherein the road condition image indicates a road condition of a road on which a first vehicle is located;
the in-vehicle terminal is configured to recognize the road condition image to obtain a recognition result, obtain loading delay compensation data based on the recognition result, and send the loading delay compensation data and the recognition result to the virtual reality device; wherein the recognition result indicates a type of an obstacle contained in the road condition image, the loading delay compensation data indicates a moment when the virtual reality device displays at least one element in a virtual reality picture, and the at least one element forms a virtual scene presented by the virtual reality picture and provides a user with virtual reality perception;
the virtual reality device is configured to obtain loading displacement data based on the recognition result and display the virtual reality picture based on the loading delay compensation data and the loading displacement data, wherein the loading displacement data indicates a display position of the at least one element in the virtual reality picture.

2. The system according to claim 1, wherein the in-vehicle terminal is further configured to:
perform object detection on the road condition image through an object detection model to obtain an object detection result, wherein the object detection result indicates whether an obstacle exists in the road condition image; and
obtain the recognition result based on the object detection result in a case where the object detection result indicates that the obstacle exists in the road condition image;
wherein the recognition result comprises a first position of the obstacle in the road condition image and the obstacle type corresponding to the obstacle.

3. The system according to claim 1 or 2, wherein the in-vehicle terminal is further configured to:
determine a first distance between the obstacle and the first vehicle based on the first position and a position of the first vehicle; and
determine the loading delay compensation data based on the first distance and a speed of the first vehicle.

4. The system according to any one of claims 1 to 3, wherein the in-vehicle camera assembly is further configured to collect the road condition image in real time at a preset frequency and send the road condition image to the in-vehicle terminal at the preset frequency; and
the in-vehicle terminal is further configured to: update the first distance based on the road condition image received in real time to obtain an updated first distance, obtain first delay data based on the updated first distance and the speed of the first vehicle, obtain a first unit duration consumed by the in-vehicle camera for collecting the road condition image once and sending the first unit duration to the in-vehicle terminal; and determine the loading delay compensation data based on the first delay data and the first unit duration.

5. The system according to claim 2, wherein the virtual reality device is further configured to:
determine a displacement type based on the obstacle type in the recognition result, wherein the displacement type indicates a direction for adjusting the display position of the at least one element in the virtual reality picture;
obtain a loading displacement comparison table and pixel proportion data of the obstacle in the road condition image; and
determine the loading displacement data from the loading displacement comparison table based on the pixel proportion data and the displacement type.

6. The system according to any one of claims 1 to 5, wherein the in-vehicle camera assembly is further configured to preprocess the road condition image to obtain a preprocessed road condition image meeting preset image processing format requirements, and send the preprocessed road condition image to the in-vehicle terminal; and
the in-vehicle terminal is further configured to receive the preprocessed road condition image, and recognize the preprocessed road condition image to obtain the recognition result.

7. A virtual reality display method, executed by an in-vehicle terminal, the method comprising:
receiving a road condition image, wherein the road condition image is collected by an in-vehicle camera assembly of a first vehicle and indicates a road condition of a road on which the first vehicle is located;
recognizing the road condition image as received to obtain a recognition result, wherein the recognition result indicates a type of an obstacle contained in the road condition image;
obtaining loading delay compensation data by analyzing the recognition result; and
sending the loading delay compensation data and the recognition result to a virtual reality device;
wherein the loading delay compensation data indicates a moment when the virtual reality device displays at least one element in a virtual reality picture, and the at least one element forms a virtual scene presented by the virtual reality picture and provides a user with virtual reality perception; wherein after receiving the recognition result, the virtual reality device obtains loading displacement data based on the recognition result, and displays the virtual reality picture based on the loading delay compensation data and the loading displacement data, the loading displacement data indicating a display position of the at least one element in the virtual reality picture.

8. A virtual reality display apparatus, comprising:
a receiving module configured to receive a road condition image, wherein the road condition image is collected by an in-vehicle camera assembly of a first vehicle and indicates a road condition of a road on which the first vehicle is located;
a recognition module configured to recognize the road condition image as received to obtain a recognition result, wherein the recognition result indicates a type of an obstacle contained in the road condition image;
an analysis module configured to analyze the recognition result to obtain loading delay compensation data; and
a sending module configured to send the loading delay compensation data and the recognition result to a virtual reality device, wherein the loading delay compensation data indicates a moment when the virtual reality device displays at least one element in a virtual reality picture, and the at least one element forms a virtual scene presented by the virtual reality picture and provides a user with virtual reality perception; wherein after receiving the recognition result, the virtual reality device obtains loading displacement data based on the recognition result, and displays the virtual reality picture based on the loading delay compensation data and the loading displacement data, the loading displacement data indicating a display position of the at least one element in the virtual reality picture.

9. A computer device, comprising a processor and a memory storing at least one program, wherein the processor, when loading and executing the at least one program, is caused to perform the virtual reality display method as defined in claim 7.

10. A computer-readable storage medium storing at least one program therein, wherein the at least one program, when loaded and executed by a processor, causes the processor to perform the virtual reality display method as defined in claim 7.
